# EUROPÄISCHE PATENTSCHRIFT

(11) **EP 3 485 577 B1**
(45) Veröffentlichungstag und Bekanntmachung des Hinweises auf die Patenterteilung: **10.03.2021**
(21) Anmeldenummer: 17742416.5
(22) Anmeldetag: 17.07.2017
(51) Int. Cl.: H04B 1/38, B61L 15/00, H04M 3/42

(54) **VERFAHREN ZUM BETREIBEN EINES ETCS (EUROPEAN TRAIN CONTROL SYSTEM) -BAHNFAHRZEUGS MIT EINER GSM-R-KOMMUNIKATIONSANORDNUNG UND ETCS (EUROPEAN TRAIN CONTROL SYSTEM) -BAHNFAHRZEUG MIT EINER GSM-R-KOMMUNIKATIONSANORDNUNG**
METHOD FOR OPERATING A ETCS (EUROPEAN TRAIN CONTROL SYSTEM) WAGON WITH A GSM-R COMMUNICATION SYSTEM AND ETCS WAGON WITH GSM-R COMMUNICATION DEVICE
PROCÉDÉ POUR LE MANAGEMENT D'UN WAGON ETCS (EUROPEAN TRAIN CONTROL SYSTEM) AVEC UN SYSTÈME DE COMMUNICATION GSM-R ET CONVOI ETCS AVEC DISPOSITIF GSM-R.

(30) Priorität: 17.08.2016 DE 102016215315
(43) Veröffentlichungstag der Anmeldung: 22.05.2019
(73) Patentinhaber: Siemens Mobility GmbH, 81739 München (DE)
(72) Erfinder: KENDELBACHER, Detlef, 13129 Berlin (DE); STEIN, Fabrice, 12621 Berlin (DE); WIERTH, Detlef, 12439 Berlin (DE)
(86) Internationale Anmeldenummer: PCT/EP2017/067970
(87) Internationale Veröffentlichungsnummer: WO 2018/033319

(56) Entgegenhaltungen:
- EP-A1- 1 376 940
- DE-A1- 10 041 509
- KENDELBACHER D ET AL: "Ein Kommunikationsbasissystem für ETCS (Teil 1)", SIGNAL + DRAHT, DVV, Nr. 94, 1. Juni 2002 (2002-06-01), Seiten 6-11, XP002495555, ISSN: 0037-4997
- JOHN HARMER ET AL: "EuroRadio and the RBC", IRSE (INSTITUTE OF RAILWAY SIGNAL ENGINEERS) PROCEEDINGS 2002/2003, 6. November 2002 (2002-11-06), Seiten 32-41, XP055125701,

## Beschreibung

Bahnfahrzeuge, die mit dem standardisierten ETCS (European Train Control System) ausgerüstet sind und im ETCS Level 2 oder 3 fahren, nutzen für die Kommunikation mit der jeweils zuständigen Streckenzentrale das digitale Mobilfunknetz GSM (Global System for Mobile Communications)-R, wobei "R" für Railway steht. Um eine lückenlose Zugsicherung zu gewährleisten, sind die sogenannten On-Board-Units jeweils mit zwei GSM-R-Mobilfunkgeräten bestückt, so dass während des Übergangs zur nächsten örtlich zuständigen Streckenzentrale parallele Mobilfunkverbindungen (zur vorherigen und nachfolgenden Streckenzentrale) verfügbar sind.

Die beiden Mobilfunkgeräte einer On-Board-Unit sind nur zu einem geringen Teil der ETCS-Betriebszeit parallel in Verwendung, nämlich während des Nachbarzentralenübergangs. In der überwiegenden Betriebszeit wird für ETCS Level 2 bzw. 3 nur ein GSM-R-Mobilfunkgerät belegt. Daneben gibt es Streckenabschnitte, die nicht mit ETCS Level 2 oder 3 ausgerüstet sind und auf denen der Bahnbetrieb mit anderen Zugsicherungssystemen abgewickelt wird, so dass die GSM-R-Mobilfunkgeräte während der Fahrt über diese Streckenabschnitte für ETCS nicht benötigt werden. In dieser Zeit könnten ein oder ggf. beide GSM-R-Mobilfunkgeräte für andere Dienste verwendet werden. Dabei ist allerdings zu berücksichtigen, dass im Falle einer Anforderung von Mobilfunkgeräten durch ETCS diese sofort wieder für ETCS bereitgestellt werden müssen. Außerdem muss die Qualität der Mobilkommunikation, auch als "Quality of Service" bezeichnet, für ETCS jederzeit vorhanden sein.

Um die für ETCS benötigte Qualität der Mobilkommunikation sicherzustellen, wird auf dem Fahrzeugdach für jedes GSM-R-Mobilfunkgerät eine eigene Dachantenne installiert. GSM-R-Dachantennen und ihre Zuleitungen müssen eine Reihe von Anforderungen erfüllen, die den Aufbau und die Platzierung der Antennen auf dem Dach beschränken. Diverse elektrische und mechanische Anforderungen sowie Mindestabstände zwischen den Antennen müssen eingehalten werden. Dadurch ist die mögliche Anzahl von Mobilfunkantennen auf den Schienenfahrzeugen begrenzt. Sollen neben den GSM-R-Mobilfunkantennen weitere Antennen auf einem Dach eines Bahnfahrzeugs nachgerüstet werden, entstehen oftmals Platzprobleme oder technisch aufwändige Lösungen werden notwendig.

Neben der Zugsicherung ETCS gibt es eine Reihe weiterer Bahndienste im ERTMS (European Rail Traffic Management System) und außerhalb des ERTMS mit Kommunikationsbedarf über Mobilfunk. Ein Beispiel dafür ist der Sprachdienst Zugfunk, über den der Fahrzeugführer mittels bahnspezifischen Erweiterungen des GSM Mobilfunkstandards (location dependent adressing) mit dem zuständigen Fahrdienstleiter kommunizieren kann.

Der Ausbau mobiler Bahndienste mit Sprach- und Datenkommunikation wird sich zukünftig stark weiterentwickeln, beispielsweise auch hinsichtlich neuer Dienste für Bahnfahrgäste. Dies betrifft sowohl das ETCS System selbst, als auch andere auf dem Fahrzeug vorhandene Infrastruktur- und Steuerungssysteme. Um ETCS Fahrzeuge wirtschaftlich zu betreiben, müssen künftig diverse Zusatzdienste für ERTMS über Mobilkommunikation bereitgestellt werden. Beispiele hierfür sind:
Übertragung von (verschlüsselten) Schlüsseldaten für die signaltechnisch gesicherte Funkkommunikation an Fahrzeuge, beispielsweise aufgrund von zeitlich eingeschränkter Schlüsselgültigkeit oder für das Befahren neuer Streckenabschnitte durch Mietfahrzeuge, Übertragung von Software bzw. Konfigurationsdaten an Fahrzeuge (z.B. zur Anpassung an Betriebssitüationen oder zur Fehlerkorrektur), Übertragung von Statusinformationen des ETCS Systems oder anderer Fahrzeugkomponenten (Ort, Geschwindigkeit, Level etc.) an streckenseitige Dispatcher und
Übertragung von Diagnosedaten des ETCS-Systems oder anderer Fahrzeugkomponenten an streckenseitige Wartungseinrichtungen.

Neben den ETCS-Datendiensten im bahneigenen GSM-R-Netz besteht für neue Bahndienste auch der Bedarf, öffentliche Mobilfunknetze mit Services der 3. und 4. Generation (z.B. UMTS (Universal Mobile Telecommunications System) zu nutzen.

Es ist aus technischen und wirtschaftlichen Gründen nicht möglich, für jeden Bahndienst eine eigene Mobilfunkantenne zu installieren. Auch eine gleichzeitige Nutzung der vorhandenen GSM-R-Mobilfunkantennen für die Anschaltung weiterer Mobilfunkgeräte mit UMTS oder LTE (Long Term Evolution)-Datendiensten, beispielsweise durch Nutzung eines Diplexers, ist wegen der überlappenden bzw. zu nahe beieinander liegenden Frequenzbereiche nicht möglich.

Der Erfindung liegt die Aufgabe zugrunde, ein Verfahren zum Betreiben eines ETCS-Bahnfahrzeugs mit einer GSM-R-Kommunikationsanordnung anzugeben, mit dem sich die bisher vorhandenen Kommunikationsmöglichkeiten erweitern lassen.

Die bekannte DE 100 41 509 A1 beschreibt ein Verfahren zur Übermittlung betrieblicher Informationen unter Berücksichtigung ihrer Sicherheitsrelevanz und Dringlichkeit. Die EP 1 376 940 A1 beschreibt ein Verfahren zur Datenübertragung.

Aus KENDELBACHER D. et al. "Ein Kommunikationsbasissystem für ETCS (Teil 1)", SIGNAL+ DRAHT, DVV, Nr. 94, 1. Juni 2002, Seiten 6-11, ISSN: 0037-4997 ist ein bei Siemens entwickeltes Kommunikationsbasissystem beschrieben.

Zur Lösung dieser Aufgabe wird erfindungsgemäß ein Verfahren zum Betreiben eines ETCS (European Train Control System)-Bahnfahrzeugs mit einer GSM-R-Kommunikationsanordnung in einer On-Board-Unit mit mindestens einer GSM-R-Mobilfunkantenne für ein GSM-R-Mobilfunknetz mit mindestens einem angeschlossenen GSM-R-Mobilfunkgerät vorgeschlagen, bei dem mittels eines dem Mobilfunkgerät vorgeordneten Mobile-Multiplexers mit einer Steuerungslogik Kommandos einer ETCS-Applikations-Einheit und von eingangsseitig angeschlossenen weiteren Applikations-Einheiten prioritätsabhängig erfasst werden; prioritätsabhängig werden über das GSM-R-Mobilfunkgerät eine GSM-R-Netzwerksteuerung und ein Verbindungsaufbau in dem GSM-R-Mobilfunknetz in Abhängigkeit von den Applikations-Einheiten veranlasst.

Ein wesentlicher Vorteil des erfindungsgemäßen Verfahrens besteht darin, dass die zu einem großen Teil der Betriebszeit von ETCS-Bahnfahrzeugen frei verfügbaren GSM-R-Mobilfunkgeräte für andere Applikationen, wie beispielsweise zur Übertragung von Diagnosedaten von den Bahnfahrzeugen an ortsfeste Einrichtungen, mitbenutzt werden können. Zusätzliche GSM-R-Mobilfunkgeräte und -Antennen sind dafür nicht notwendig.

Ein weiterer Vorteil des erfindungsgemäßen Verfahrens wird darin gesehen, dass vom ETCS-Bahnfahrzeug aus die Anzahl der Kommunikationsmöglichkeiten vergleichsweise hoch ist, weil vom ETCS-Bahnfahrzeug nicht nur ETCS-Applikations-Einheiten und auch Diagnose-Applikations-Einheiten auswählbar sind, sondern auch weitere Applikations-Einheiten integrierbar sind, indem mittels des Mobile-Multiplexers eine Verbindung mit allen Übertragungsprotokollen bzw. Protokollstapeln der beteiligten Applikations-Einheiten gegeben ist. Es können somit die für ETCS eingebauten Mobilfunkgeräte für eine Vielzahl von Sprach- und Datendiensten verwendet werden, weil - wie oben bereits angemerkt - zu einem großen Teil der möglichen Einsatzzeiten die GSM-R-Mobilfunkgeräte bisher ungenutzt sind. Die Anzahl der in das erfindungsgemäße Verfahren integrierbaren Applikationen ist somit flexibel und erweiterbar und nur von den Dienstgüteanforderungen abhängig.

Die Prioritäten können bei dem erfindungsgemäßen Verfahren darüber hinaus flexibel definiert werden, so dass das Verfahren an die Bedürfnisse unterschiedlicher Applikationen im Rahmen der verfügbaren Mobilfunkressourcen angepasst werden kann.

Hinzu kommt, dass in vorteilhafter Weise durch die Integration mehrerer Applikationen in die ETCS-Datenübertragungsinfrastruktur das Problem des begrenzten Einbauraums für die GSM-R-Antennen auf den Dächern der ETCS-Bahnfahrzeuge entfallen kann.

Ferner ist bei dem erfindungsgemäßen Verfahren in vorteilhafter Weise sicher gestellt, dass bei seinem Ablauf keine Abbrüche von ETCS-Kommunikationsverbindungen entstehen.

In der Regel sind - wie oben bereits angemerkt - die ETCS-Bahnfahrzeuge mit zwei GSM-R-Mobilfunkgeräten ausgerüstet; mindestens ein GSM-R-Mobilfunkgerät ist unbedingt erforderlich. In diesem Falle ist es vorteilhaft, wenn bei dem erfindungsgemäßen Verfahren mit mindestens einem weiteren GSM-R-Mobilfunkgerät des ETCS-Bahnfahrzeugs mit dem Mobile-Multiplexer der Zustand aller Mobilfunkgeräte des ETCS-Bahnfahrzeugs überwacht und prioritätsabhängig gesteuert wird. Dazu sind die Mobilfunkgeräte alternativ mit der ETCS-Applikation oder weiteren Applikationen verbunden.

Bei dem erfindungsgemäßen Verfahren ist es ferner vorteilhaft, wenn bei dem Mobile-Multiplexer eingangsseitig frei mit den angeschlossenen Applikations-Einheiten verknüpfbare Eingänge und ausgangsseitig frei mit Schnittstellen der GSM-R-Mobilfunkgeräte in Verbindung stehende Ausgänge verwendet werden. Die logischen Verbindungen zwischen den Applikationen und den Schnittstellen der GSM-R-Mobilfunkgeräte sind somit nicht mehr fest bzw. konstant, sondern werden mittels des Mobile-Multiplexers flexibel und nach Bedarf eingerichtet.

Als vorteilhaft hat es sich ferner erwiesen, wenn bei dem erfindungsgemäßen Verfahren die Applikations-Einheiten jeweils Prioritätsmerkmale generieren, mittels deren prioritätsabhängige Verbindungs- und Netzsteuerungsaktivitäten durch den Mobile-Multiplexer erfolgen. Damit ist die Möglichkeit gegeben, zu entscheiden, welche Verbindungsanforderungen oder Netzwerkkommandos zu bevorzugen sind und welche vorhandenen Verbindungen gegebenenfalls auszulösen bzw. abzubrechen sind, wenn der Bedarf an Mobilfunkverbindungen größer als die verfügbaren Mobilfunkressourcen ist oder wenn niederpriore Verbindungen in bestehenden GSM-R-Netzwerken den Wechsel in neue GSM-R-Netzwerke blockieren.

Zum sicheren Ablauf des erfindungsgemäßen Verfahrens trägt ferner bei, wenn Kommandos zur GSM-R-Netzwerksteuerung ausschließlich von der ETCS-Applikations-Einheit generiert werden, wobei bestehende Verbindungen mit niedriger Priorität in nicht kommandierten Netzen durch den Mobile-Multiplexer ausgelöst werden. Dabei sind unter nicht kommandierten Netzen solche Netze zu verstehen, in welche die GSM-R-Mobilfunkgeräte aktuell eingebucht sind und welche abweichend zu den aktuell angeforderten GSM-R-Netzen sind.

Bei dem erfindungsgemäßen Verfahren wird es auch als vorteilhaft angesehen, wenn Kommandos zur GSM-R-Netzwerksteuerung von allen Applikations-Einheiten erzeugt werden, wobei bestehende Verbindungen mit niedriger Priorität in nicht kommandierten Netzen durch den Mobile-Multiplexer ausgelöst werden.

Andererseits kann es auch vorteilhaft sein, wenn Kommandos zur GSM-R-Netzwerksteuerung von allen Applikations-Einheiten erzeugt werden und Kommandos zur GSM-R-Netzwerksteuerung mit niedriger Priorität von dem Mobile-Multiplexer ignoriert werden.

Das erfindungsgemäße Verfahren ist ferner vorteilhaft, wenn Kommandos der ETCS-Applikations-Einheit zu Verbindungsaufbauanforderungen stets priorisiert werden.

Die Erfindung betrifft ferner ein ETCS (European Train Control System)-Bahnfahrzeug mit einer GSM-R-Kommunikationsanordnung in einer On-Board-Unit des ETCS-Bahnfahrzeugs mit mindestens einer GSM-R-Mobilfunkantenne für ein GSM-R-Mobilfunknetz mit mindestens einem angeschlossenen GSM-R-Mobilfunkgerät, und stellt sich die Aufgabe, ein ETCS-Bahnfahrzeug mit erweiterten Kommunikationsmöglichkeiten zu schaffen.

Zur Lösung dieser Aufgabe ist erfindungsgemäß im ETCS-Bahnfahrzeug ein mit einer Steuerungslogik versehener Mobile-Multiplexer vorhanden , der geeignet ist, Kommandos von mehreren eingangsseitig angeschlossenen Applikations-Einheiten prioritätsabhängig zu erfassen und prioritätsabhängig über das mindestens eine nachgeordnete GSM-R-Mobilfunkgerät eine GSM-R-Netzwerksteuerung und einen Verbindungsaufbau in dem GSM-R-Mobilfunknetz in Abhängigkeit von den Applikations-Einheiten zu veranlassen.

Die Vorteile des erfindungsgemäßen Bahnfahrzeugs entsprechen sinngemäß den Vorteilen, die zum oben behandelten Verfahren angeführt sind.

Ist das ETCS-Bahnfahrzeug mit mindestens einem weiteren GSM-R-Mobilfunkgerät versehen, dann ist der Mobile-Multiplexer in vorteilhafter Weise geeignet, den Zustand aller Mobilfunkgeräte des ETCS-Bahnfahrzeugs zu überwachen und prioritätsabhängig zu steuern.

Bei dem erfindungsgemäßen ETCS-Bahnfahrzeug ist es vorteilhaft, wenn sich der Mobile-Multiplexer in einem nichtsicherheitsrelevanten Rechner der On-Board-Unit des ETCS-Bahnfahrzeugs befindet. Dabei kann die Funktionalität des Mobile-Multiplexers in einem nichtsicherheitsrelevanten Vorverarbeitungsrechner der On-Board-Unit als Softwarekomponente bereit gestellt werden, so dass Hardwareerweiterungen hierfür nicht notwendig sind.

Die weiteren Applikations-Einheiten können unterschiedlich untergebracht sein. Vorteilhafterweise sind die weiteren Applikations-Einheiten in der On-Board-Unit installiert.

Es kann aber auch vorteilhaft sein, zumindest eine weitere Applikations-Einheit außerhalb der On-Board-Unit in einer externen Einrichtung zu installieren, die über eine Schnittstelle mit dem nichtsicherheitsrelevanten Vorverarbeitungsrechner verbunden ist.

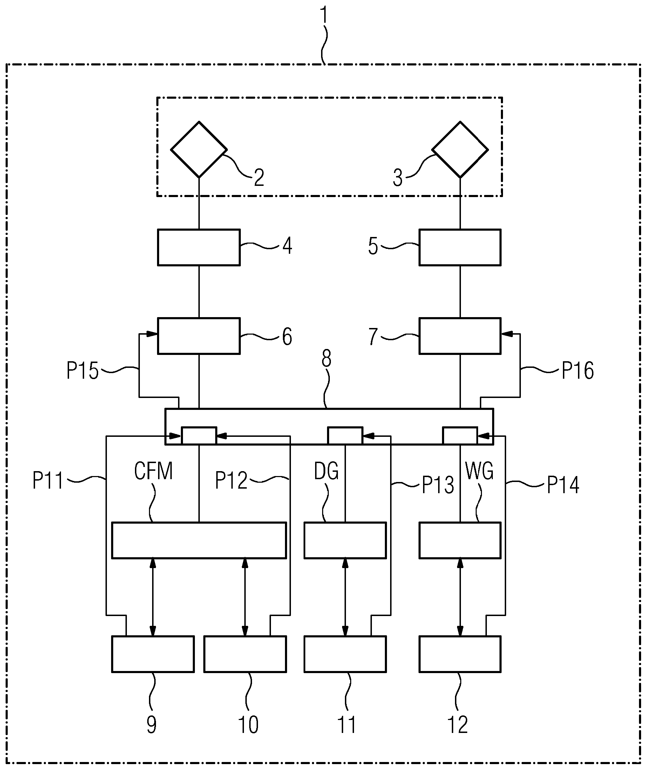

Zur weiteren Erläuterung sind in der Figur die erfindungswesentlichen Elemente der On-Board-Unit eines erfindungsgemäßen ETCS-Bahnfahrzeugs dargestellt.

Die in der Figur dargestellte On-Board-Unit 1 eines im Weiteren nicht gezeigten ETCS-Bahnfahrzeugs weist neben einem ferner nicht gezeigten signaltechnisch sicheren Rechner und einem nichtsicherheitsrelevanten Vorverarbeitungsrechner in der On-Board-Unit 1 eine GSM-R-Kommunikationsanordnung auf, die eine GSM-R-Mobilfunkantenne 2 und eine weitere GSM-R-Mobilfunkantenne 3 enthält. Mit den GSM-R-Mobilfunkantennen 2 und 3 ist jeweils ein GSM-R-Mobilfunkgerät 4 und ein weiteres GSM-R-Mobilfunkgerät 5 verbunden. Sowohl die GSM-R-Mobilfunkantennen 2 und 3 als auch die GSM-R-Mobilfunkgeräte 4 und 5 sind zum Einsatz in einem GSM-R-Mobilfunknetz geeignet.

Den GSM-R-Mobilfunkgeräten 4 und 5 ist jeweils ein Mobile-Adapter 6 sowie ein weiterer Mobile-Adapter 7 vorgeordnet. Eingangsseitig sind die Mobile-Adapter 6 und 7 mit einem Mobile-Multiplexer 8 verbunden, der mit verschiedenen Applikationen in Verbindung steht. Eine Applikation ist eine ETCS-Applikation 9 für die Zugsicherung; für ETCS ist der Mobile-Multiplexer 8 dabei mit dem Euroradio-Protokollstapel CFM (Communication Functional Module) gemäß UNISIG Subset 37 verbunden, wobei unter UNISIG ein Normierungsstandard europäischer Bahnhersteller zu verstehen ist. Außer der ETCS-Applikation 9 können über das CFM zusätzliche Unisig-Applikationen 10 kommunizieren. Außerdem existieren unabhängig von dem Mobile-Multiplexer 8 unisig-konforme Protokollstrukturen im CFM. Das Verfahren und die Funktion des Mobile-Multiplexers sind also für die ETCS-Datenübertragung und den Euroradio-Standard zur Datenübertragung transparent.

Ferner ist mit dem Mobile-Muliplexer 8 eine Diagnose-Applikation 11 verbunden, die mittels spezifischer Diagnose-Protokolle DG kommuniziert und über den Mobile-Multiplexer 8 Verbindungen zu einer streckenseitigen Einrichtung aufbauen kann. Daneben können weitere Applikationen 12 im Fahrzeug vorhanden sein und unter Verwendung weiterer Protokolle WG GSM-R Verbindungen über den Mobile-Multiplexer 8 aufnehmen.

Die weiteren Applikationen 11 und 12 und deren Übertragungsprotokolle bzw. deren Protokollstapel können entweder direkt im nichtsicherheitsrelevanten Vorverarbeitungsechner oder in externen Komponenten innerhalb oder außerhalb der On-Board-Unit 1 angeordnet sein und über geeignete Schnittstellen mit dem Mobile-Multiplexer 8 verbunden werden.

Mit dem Pfeil P11 ist in der Figur angedeutet, dass mit der ETCS-Applikation 9 Verbindungen mit hoher bzw. höchster Priorität gebildet werden, um sicher zu stellen, dass Kommunikationsverbindungen zur Zugsicherung in jedem Falle Vorrang genießen. Die Prioritäten der übrigen Applikationen 10, 11 und 12 mit Pfeilen P12 bis P14 sind hier nicht vorbestimmt, sondern richten sich nach der erforderlichen Quality of Service für die jeweilige Applikation.

Mit Pfeilen P15 und P16 sind von dem Mobile-Multiplexer 8 den Mobile-Adaptern 6 und 7 zugewiesene Netz-Prioritäten bezeichnet.

Netzseitig ist der Mobile-Multiplexer 8 mit den in das Verfahren integrierten Mobile Adaptern 6 und 7 der On-Board-Unit 1 des ETCS-Bahnfahrzeugs verbunden. In einer minimalen Ausstattung des Bahnfahrzeugs kann auch ein Mobile-Adapter vorgesehen sein.

Die Mobile-Adapter 6 und 7 setzen abstrakte Kommandos der Applikationen (beispielsweise Verbindungsaufbauanforderungen) in konkrete AT-Kommandos, also Kommandos an der Schnittstelle zum Mobilfunkgerät, zur Ansteuerung der GSM-R-Mobilfunkgeräte 4 und 5 um. Damit stellen die Mobile-Adapter 6 und 7 die spezifischen Geräteschnittstellen zu den verwendeten GSM-R-Mobilfunkgeräten dar. Jedem GSM-R-Mobilfunkgerät ist genau ein Mobile-Adapter 6 bzw. 7 fest zugeordnet.

In dieser Anordnung werden alle Kommandos und Daten zwischen den Applikationen und den GSM-R-Mobilfunkgeräten 4 bzw. 5 über den Mobile-Multiplexer 8 geführt. Der Mobile-Multiplexer 8 untersucht die applikationsseitig eintreffenden Kommandos zur Netzwerksteuerung und zum Verbindungsaufbau und steuert in Abhängigkeit seiner Logik, des aktuellen Zustandes der GSM-R-Mobilfunkgeräte, der eintreffenden Kommandos und deren Prioritäten die Einbuchung der GSM-R-Mobilfunkgeräte 4 und 5 in GSM-R-Netzwerke und den GSM-R Verbindungsaufbau. Weiterhin verwaltet der Mobile-Multiplexer 8 Zustandsinformationen über die aktuelle Netzeinbuchung der GSM-R Mobilfunkgeräte 8, über deren Belegungszustand und über die Priorität der bestehenden Verbindungen.

Verbindungsanforderungen, die von den Protokollstapeln bzw. Applikationen eintreffen, werden vom Mobile-Multiplexer 8 den verfügbaren Mobile-Adaptern 6 bzw. 7 zugeteilt. Da heißt, dass keine starren Verbindungen zwischen den Übertragungsprotokollen bzw. Protokollstapeln und den jeweiligen Mobile-Adaptern 6 bzw. 7 bestehen, sondern im Zeitpunkt ihrer Anforderung durch den Mobile-Multiplexer 8 für die Dauer der Verbindung eingerichtet werden.

Um die verfügbaren GSM-R-Mobilfunkgeräte 4 bzw. 5 neben ETCS für weitere Applikationen ohne Qualitätsverlust für die ETCS-Datenübertragung bereit zu stellen, muss die Zuteilung von Mobilfunkressourcen zu Verbindungsanforderungen und Kommandos der Netzwerksteuerung nach einem speziellen Verfahren erfolgen. Dabei müssen ETCS-Kommunikationsanforderungen stets mit höchster Priorität behandelt werden, um negative Auswirkungen auf den ETCS-Betriebsablauf zu vermeiden. Dafür benötigt der Mobile-Multiplexer 8 eine - nicht gezeigte - Steuerungslogik und zusätzliche Informationen, mit denen er entscheiden kann, ob und wie Kommandos zur Netzwerksteuerung und zum Verbindungsaufbau umgesetzt werden können. In Einzelfällen muss der Mobile-Multiplexer 8 für die Realisierung von Kommandos zur Netzwerksteuerung oder zum Verbindungsaufbau bestehende Verbindungen mit niedriger Priorität abbrechen.

Um Kommandos zum Verbindungsaufbau korrekt umsetzen zu können, benötigt der Mobile-Multiplexer 8 jeweils eine Information über die Priorität der angeforderten Verbindung. Die Information zur Verbindungspriorität kann dem Mobile-Multiplexer 8 auf unterschiedliche Art und Weise bereitgestellt werden.

Eine mögliche Variante besteht darin, separate Schnittstellen zwischen den beteiligten Applikationen 9 bis 12 und dem Mobile-Multiplexer 8 einzuführen, über welche die Applikationen ein Prioritätskennzeichen an den Mobile-Multiplexer 8 übertragen. Nur die ETCS-Applikation 9 darf die höchste Priorität zum Verbindungsaufbau benutzen. Alle anderen Applikationen 10 bis 12 müssen Verbindungen mit niedriger Priorität anfordern, damit die ETCS-Datenübertragung nicht unzulässig behindert wird. Zwischen der zusätzlichen Applikation 10 und den weiteren Applikationen 11 und 12 können bei Bedarf abgestufte Prioritäten festgelegt werden. Der Mobile-Multiplexer 8 muss in der Lage sein, die Priorität aller eintreffenden Kommandos zum Verbindungsaufbau in Bezug auf die bestehenden Verbindungen zu bewerten. Dazu müssen im Mobile-Multiplexer 8 alle definierten Prioritäten hinterlegt sein.

Alle im Mobile-Multiplexer 8 eintreffenden Steuerungsbefehle der Applikationen 9 bis 12 werden auf enthaltene Kommandos zur Netzwerksteuerung und zum Verbindungsaufbau analysiert. Trifft ein Kommando zum Verbindungsaufbau im Mobile-Multiplexer 8 ein, führt der Mobile-Multiplexer 8 zustandsabhängig folgende Aktivitäten durch:
- Ermittlung von Priorität und Netzwerkkennung der angeforderten Verbindung
- Prüfung, ob mindestens ein GSM-R-Mobifunkgerät 4 bzw. 5 im GSM-R-Netz mit der angeforderten Netzwerkkennung eingebucht ist.
- Falls das nicht der Fall ist, weist der Mobile-Multiplexer 8 die Verbindungsaufbauanforderung zurück.
- Falls das der Fall ist, prüft der Mobile-Multiplexer 8, ob mindestens ein GSM-R Mobilfunkgerät 4 bzw. 5 aktuell keine Verbindung hält, d.h. frei ist.
- Falls das der Fall ist, wählt der Mobile-Multiplexer 8 ein freies GSM-R-Mobilfunkgerät 4 bzw. 5 aus, stellt eine logische Verbindung zwischen dem rufenden Protokoll bzw. Protokollstapel der ausgewählten Mobile-Schnittstelle her und leitet die Verbindungsanforderung weiter an die Mobile-Schnittstelle; im Falle mehrerer freier GSM-R Mobilfunkgeräte 4 bzw. 5 kann der Mobile-Multiplexer 8 ein beliebiges GSM-R-Mobilfunkgerät 4 bzw. 5 auswählen oder einer festgelegten Belegungsstrategie folgen.
- Falls das nicht der Fall ist, prüft der Mobile-Multiplexer 8, ob ein GSM-R Mobilfunkgerät 4 bzw. 5 eine Verbindung mit niedriger Priorität hält (d.h., keine ETCS Datenverbindung ist).
- Falls das der Fall ist, wählt der Mobile-Multiplexer 8 das GSM-R-Mobilfunkgerät 4 bzw. 5 aus, welches eine Verbindung mit der niedrigsten Priorität hält und sendet an dieses GSM-R-Mobilfunkgerät 4 bzw. 5 nacheinander Kommandos:
   o 1. Zum Abbruch der bestehenden Verbindung
   o 2. Zur Wiederherstellung und Prüfung der Mobilfunk-Bereitschaft
   o 3. Zum Verbindungsaufbau im angeforderten GSM-R-Netz
- Die angeforderte GSM-R-Verbindung wird daraufhin eingerichtet und die Priorität der neuen Verbindung wird im Mobile-Multiplexer 8 registriert.
- Falls das nicht der Fall ist, weist der Mobile-Multiplexer 8 das Kommando zum Verbindungsaufbau zurück.

Für Kommandos zur Netzwerksteuerung sieht das erfindungsgemäße Verfahren zwei unterschiedliche Varianten vor:
Bei einer ersten Variante dürfen Kommandos zur Netzwerksteuerung ausschließlich durch die ETCS-Applikation 9 generiert werden. Andere Applikationen können Verbindungen nur in den GSM-R-Netzen aufbauen, in denen die GSM-R-Mobilfunkgeräte aktuell eingebucht sind.

Trifft ein Kommando zur Netzwerksteuerung im Mobile-Multiplexer 8 ein, führt der Mobile-Multiplexer 8 zustandsabhängig folgende Aktivitäten durch:
- Ermittlung, ob mindestens ein GSM-R Mobilfunkgerät 4 bzw. 5 aktuell im angeforderten GSM-R-Netz eingebucht ist.
- Falls das der Fall ist, führt der Mobile-Multiplexer 8 keine weitere Aktivität aus; ebenso erfolgt keine Aktivität im Mobile-Multiplexer 8, wenn statt einer Kommandierung in ein spezifisches GSM-R-Netz ein Automatik-Mode durch ETCS vorgegeben wird
- falls das nicht der Fall ist, prüft der Mobile-Multiplexer 8, ob mindestens ein GSM-R-Mobilfunkgerät 4 bzw. 5 aktuell keine Verbindung hält, d.h. frei ist.
- Falls das der Fall ist, leitet der Mobile-Multiplexer 8 das Kommando zu Netzwerksteuerung an ein freies GSM-R-Mobilfunkgerät 4 bzw. 5 weiter.
- Falls das nicht der Fall ist, prüft der Mobile-Multiplexer 8, ob ein GSM-R Mobilfunkgerät 4 bzw. 5 eine Verbindung mit niedriger Priorität hält (d.h. keine ETCS Datenverbindung aufrecht erhält).
- Falls das der Fall ist, wählt der Mobile-Multiplexer 8 das GSM-R-Mobilfunkgerät 4 bzw. 5 aus, welches eine Verbindung mit der niedrigsten Priorität hält und sendet an dieses GSM-R-Mobilfunkgerät nacheinander Kommandos:
   ∘ 1. Zum Abbruch der bestehenden Verbindung
   ∘ 2. Zur Wiederherstellung und Prüfung der Mobilfunk-Bereitschaft
   ∘ 3. Zur Netzwerksteuerung in das angeforderte GSM-R-Netz
- Das GSM-R-Mobilfunkgerät 4 bzw. 5 wechselt daraufhin in das angegebene Netz und meldet seinen neuen Netzwerkstatus zurück, welcher im Mobile-Multiplexer 8 registriert wird.

Bei einer weiteren Variante zur Netzwerksteuerung dürfen Kommandos zur Netzwerksteuerung von allen Applikation 9 bis 12 generiert werden. Jede Applikation 9 bis 12 generiert ein spezifisches Prioritätsmerkmal für ihre Kommandos zur Netzwerksteuerung und sendet dieses an den Mobile-Multiplexer 8, welcher die Kommandos prioritätsgerecht umsetzt. Die ETCS-Applikation 9 sendet Kommandos mit der höchsten Priorität, während die übrigen Applikationen 10 bis 12 Kommandos zur Netzwerksteuerung mit niedrigerer Priorität generieren. Der Mobile-Multiplexer 8 muss in der Lage sein, eintreffende Kommandos zur Netzwerksteuerung hinsichtlich ihrer Priorität zu bewerten.

Trifft ein Kommando zur Netzwerksteuerung im Mobile-Multiplexer 8 ein, führt der Mobile-Multiplexer 8 zustandsabhängig folgende Aktivitäten durch:
- Ermittlung, ob mindestens ein GSM-R-Mobilfunkgerät 4 bzw. 5 aktuell im angeforderten GSM-R-Netz eingebucht ist bzw. der geforderte Netzwerk-Modus (automatisch bzw. kommandiert) besteht.
- Falls das der Fall ist, führt der Mobile-Multiplexer 8 keine weitere Aktivität aus.
- Falls das nicht der Fall ist, prüft der Mobile-Multiplexer 8, ob das Kommando zur Netzwerksteuerung von der ETCS-Applikation 9 mit der höchsten Priorität gesendet wurde.
- Falls das der Fall ist, prüft der Mobile-Multiplexer 8, ob mindestens ein GSM-R-Mobilfunkgerät 4 bzw. 5 aktuell keine Verbindung hält, d.h. frei ist.
- Falls das der Fall ist, leitet der Mobile-Multiplexer 8 das Kommando zu Netzwerksteuerung an ein freies GSM-R-Mobilfunkgerät 4 bzw. 5 weiter.
- Falls das nicht der Fall ist, prüft der Mobile-Multiplexer 8, ob mindestens ein GSM-R-Mobilfunkgerät 4 bzw. 5 eine Verbindung mit niedriger Priorität hält, die keine ETCS Datenverbindung ist.
- Falls das der Fall ist, wählt der Mobile-Multiplexer 8 ein GSM-R-Mobilfunkgerät 4 bzw. 5 aus, welches eine Verbindung mit der niedrigsten Priorität hält und sendet an dieses GSM-R-Mobilfunkgerät 4 bzw. 5 nacheinander Kommandos:
   ∘ 1. Zum Abbruch der bestehenden Verbindung
   ∘ 2. Zur Wiederherstellung und Prüfung der Mobilfunk-Bereitschaft
   ∘ 3. Zur Netzwerksteuerung in das angeforderte GSM-R-Netz bzw. in den geforderten Netzwerk-Modus.
- Das GSM-R Mobilfunkgerät wechselt daraufhin in das angegebene GSM-R-Netz und meldet seinen neuen Netzwerkstatus zurück, welcher im Mobile-Multiplexer 8 registriert wird.
- Falls das nicht der Fall ist, prüft der Mobile-Multiplexer 8, ob mindestens zwei GSM-R-Mobilfunkgeräte 4 und 5 aktuell keine Verbindung halten, d.h. frei sind.
- Falls das der Fall ist, leitet der Mobile-Multiplexer 8 das Kommando zu Netzwerksteuerung an ein freies GSM-R-Mobilfunkgerät weiter.
- Falls das nicht der Fall ist, prüft der Mobile-Multiplexer 8, ob ein GSM-R-Mobilfunkgerät eine Verbindung mit niedrigerer Priorität als das vorliegende Kommando zur Netzwerksteuerung hält.
- Falls das der Fall ist, wählt der Mobile-Multiplexer 8 ein GSM-R Mobilfunkgerät aus, welches eine Verbindung mit der niedrigsten Priorität hält und sendet an dieses GSM-R-Mobilfunkgerät nacheinander Kommandos:
   ∘ 1. Zum Abbruch der bestehenden Verbindung
   ∘ 2. Zur Wiederherstellung und Prüfung der Mobilfunk-Bereitschaft
   ∘ 3. Zur Netzwerksteuerung in das angeforderte GSM-R-Netz bzw. in den geforderten Netzwerk-Modus
- Das GSM-R-Mobilfunkgerät wechselt daraufhin in das angegebene GSM-R-Netz und meldet seinen neuen Netzwerkstatus zurück, welcher im Mobile-Multiplexer 8 registriert wird.
- Falls das nicht der Fall ist, führt der Mobile-Multiplexer 8 keine weitere Aktivität aus.

Für das Trennen bestehender GSM-R-Verbindungen und das Wiederherstellen der Bereitschaft von GSM-R-Mobilfunkgeräten besitzt der Mobile-Multiplexer 8 eine zusätzliche Funktionalität, welche Kommandos zur Verbindungssteuerung generieren kann. Eine abzubrechende GSM-R-Verbindung, die sich aktuell in der Datenphase befindet und auf der Daten übertragen werden, wird vom Mobile-Multiplexer 8 mit geeigneten Befehlen zur Verbindungssteuerung abgebrochen. Weiterhin generiert der Mobile-Multiplexer 8 eine Meldung an den zur abgebrochenen Verbindung zugehörigen Protokollstapel, mit welcher die entsprechende Applikation über den Verbindungsabbruch informiert wird.

Bei dem vom Mobile-Multiplexer 8 ausgelösten Verbindungsabbruch können Daten der korrespondierenden Protokolle bzw. Applikationen verloren gehen. Da Verbindungsabbrüche im Mobilfunk grundsätzlich nicht ausgeschlossen werden können, müssen Mobilfunk-Applikationen ohnehin daraufhin ausgelegt sein.

Durch die Möglichkeit zusätzlich initiierter Verbindungsabbrüche ist die Dienstgüte der Mobilfunkverbindungen für andere Applikationen gegenüber ETCS eingeschränkt. Ob die außerhalb der ETCS-Datenübertragung verfügbare Servicequalität für die weiteren Applikation ausreichend ist, muss im Einzelfall untersucht und bewertet werden. Andere Applikationen, deren Mobilfunkübertragung durch moderate Datenmengen mit geringen Latenzzeitanforderungen gekennzeichnet sind, wie beispielsweise Diagnose-Applikationen, sind potentiell geeignet, die freien Übertragungsressourcen von ETCS zu nutzen.

Nach einem vom Mobile-Multiplexer 8 ausgelösten Verbindungsabbruch sorgt der Mobile-Multiplexer 8 dafür, dass das zugehörige GSM-R-Mobilfunkgerät 4 bzw. 5 schnellst möglich wieder in Bereitschaft für eine neue GSM-R-Verbindung kommt. Das kann beispielsweise durch Senden einer geeigneten Initialisierungssequenz oder durch das Abwarten einer festgelegten Zeitdauer erfolgen. Die Bereitschaft des GSM-R-Mobilfunkgerätes für eine neue GSM-R-Verbindung kann durch den jeweiligen Mobile-Adapter 6 bzw. 7 an den Mobile-Multiplexer 8 gemeldet werden.

Nach dem Absetzen der Kommandos zur Netzwerksteuerung oder zum Verbindungsaufbau an den jeweiligen Mobile-Adapter 6 bzw. 7 ist der Mobile-Multiplexer 8 transparent für den weiteren Kommunikationsablauf. Kommandos und Daten der kommunizierenden Applikationen werden über bestehende Verbindungen in beide Richtungen unverzögert übermittelt.

Bestehende Verbindungen können auf unterschiedliche Art beendet werden. Im regulären Fall wird eine Mobilfunkverbindung durch die kommunizierenden Applikationen beendet, nachdem die Datenübertragung erfolgreich abgeschlossen wurde. Irregulär können Verbindungen durch die GSM-R-Infrastruktur, die beteiligten Übertragungsprotokolle bzw. Protokollstapel oder durch den Mobile-Multiplexer 8 abgebrochen werden. In allen Fällen wird beim Beenden einer Verbindung der im Mobile-Multiplexer 8 registrierte Verbindungszustand zurückgesetzt.

Um die Netzwerksteuerung zu ermöglichen, registriert der Mobile-Multiplexer 8 für jedes verfügbare GSM-R-Mobilfunkgerät, in welches GSM-R-Netz es aktuell eingebucht ist. Diese Information entnimmt der Mobile-Multiplexer 8 den Meldungen zum Status der Netzwerkregistrierung. Falls sich der Registrierungsstatus eines GSM-R-Mobilfunkgerätes im GSM-R-Netz beispielsweise durch Fehler im Netzwerk ändert, wird die Registrierung im Mobile-Multiplexer 8 auf Basis einer ETCS-Statusmeldung automatisch angepasst. Damit hat der Mobile-Multiplexer 8 jederzeit die aktuellen Informationen über die Belegung der GSM-R-Ressourcen.

## Patentansprüche

1. Verfahren zum Betreiben eines ETCS, European Train Control System, Bahnfahrzeugs mit einer GSM-R-Kommunikationsanordnung in einer On-Board-Unit (1) mit mindestens einer GSM-R-Mobilfunkantenne (2,3) für ein GSM-R-Mobilfunknetz mit mindestens einem angeschlossenen GSM-R-Mobilfunkgerät (4,5), bei dem mittels eines dem Mobilfunkgerät (4,5) vorgeordneten Mobile-Multiplexers (8) mit einer Steuerungslogik Kommandos einer ETCS-Applikations-Einheit (9) und von eingangsseitig angeschlossenen weiteren Applikations-Einheiten (10 bis 12) prioritätsabhängig erfasst und prioritätsabhängig über das GSM-R-Mobilfunkgerät (4,5) eine GSM-R-Netzwerksteuerung und ein Verbindungsaufbau in dem GSM-R-Mobilfunknetz in Abhängigkeit von den Applikations-Einheiten (9 bis 12) veranlasst werden.

2. Verfahren nach Anspruch 1,
**dadurch gekennzeichnet, dass**
bei mindestens einem weiteren GSM-R-Mobilfunkgerät (4,5) des ETCS-Bahnfahrzeugs mit dem Mobile-Multiplexer (8) der Zustand aller Mobilfunkgeräte (4,5) des ETCS-Bahnfahrzeugs überwacht und prioritätsabhängig gesteuert wird.

3. Verfahren nach Anspruch 1 oder 2,
**dadurch gekennzeichnet, dass**
bei dem Mobile-Multiplexer (8) eingangsseitig frei mit den angeschlossenen Applikations-Einheiten (9 bis 12) verknüpfbare Eingänge und ausgangsseitig frei mit Schnittstellen der Mobilfunkgeräte (4;5) in Verbindung stehende Ausgänge verwendet werden.

4. Verfahren nach einem der vorangehenden Ansprüche,
**dadurch gekennzeichnet, dass**
die Applikations-Einheiten (9 bis 12) jeweils Prioritätsmerkmale generieren, mittels deren prioritätsabhängige Verbindungs- und Netzsteuerungsaktivitäten durch den Mobile-Multiplexer (8) erfolgen.

5. Verfahren nach einem der vorangehenden Ansprüche,
**dadurch gekennzeichnet, dass**
Kommandos zur GSM-R-Netzwerksteuerung ausschließlich von der ETCS-Applikations-Einheit (9) generiert werden, wobei bestehende Verbindungen mit niedriger Priorität in nicht kommandierten Netzen durch den Mobile-Multiplexer (8) ausgelöst werden.

6. Verfahren nach einem der Ansprüche 1 bis 4,
**dadurch gekennzeichnet, dass**
Kommandos mit Prioritätsmerkmalen zur GSM-R-Netzwerksteuerung von allen Applikations-Einheiten erzeugt werden, wobei bestehende Verbindungen mit niedriger Priorität in nicht kommandierten Netzen durch den Mobile-Multiplexer ausgelöst werden.

7. Verfahren nach einem der Ansprüche 1 bis 4,
**dadurch gekennzeichnet, dass**
Kommandos mit Prioritätsmerkmalen zur GSM-R-Netzwerksteuerung von allen Applikationseinheiten erzeugt werden und Kommandos zur GSM-R Netzwerksteuerung mit niedriger Priorität von dem Mobile-Multiplexer ignoriert werden.

8. Verfahren nach einem der vorangehenden Ansprüche,
**dadurch gekennzeichnet, dass**
Kommandos der ETCS-Applikations-Einheit (9) zu Verbindungsaufbauanforderungen und zur Netzwerksteuerung stets priorisiert werden.

9. ETCS, European Train Control System, Bahnfahrzeug, mit einer Kommunikationsanordnung in einer On-Board-Unit (1) des ETCS-Bahnfahrzeugs mit mindestens einer GSM-R-Mobilfunkantenne (2,3) für ein GSM-R-Mobilfunknetz mit einem angeschlossenen GSM-R-Mobilfunkgerät (4,5), bei dem
mindestens einem Mobilfunkgerät (4,5) ein mit einer Steuerungslogik versehener Mobile-Multiplexer (8) vorgeordnet ist, der geeignet ist,
Kommandos von mehreren eingangsseitig angeschlossenen Applikations-Einheiten (9 bis 12) prioritätsabhängig zu erfassen und
prioritätsabhängig über das nachgeordnete Mobilfunkgerät (4,5) eine GSM-R-Netzwerksteuerung und einen Verbindungsaufbau in dem GSM-R-Mobilfunknetz in Abhängigkeit von den Applikations-Einheiten (9 bis 12) zu veranlassen.

10. ETCS-Bahnfahrzeug nach Anspruch 9,
**dadurch gekennzeichnet, dass**
bei mindestens einem weiteren GSM-R-Mobilfunkgerät (4,5) des ETCS-Bahnfahrzeugs der Mobile-Multiplexer (8) geeignet ist, den Zustand aller Mobilfunkgeräte (4,5) des ETCS-Bahnfahrzeugs zu überwachen und prioritätsabhängig zu steuern.

11. ETCS-Bahnfahrzeug nach Anspruch 9 oder 10,
**dadurch gekennzeichnet, dass**
sich der Mobile-Multiplexer (8) in einem nichtsicherheitsrelevanten Vorverarbeitungsrechner der On-Board-Unit (1) des ETCS-Bahnfahrzeugs befindet.

12. ETCS-Bahnfahrzeug nach einem der Ansprüche 9 bis 11,
**dadurch gekennzeichnet, dass**
die weiteren Applikations-Einheiten (9 bis 12) in der On-Board-Unit (1) installiert sind.

13. ETCS-Bahnfahrzeug nach einem der Ansprüche 9 bis 11,
**dadurch gekennzeichnet, dass**
zumindest eine weitere Applikations-Einheit außerhalb der On-Board-Unit in einer externen Einrichtung installiert ist, die über eine Schnittstelle mit dem nichtsicherheitsrelevanten Vorverarbeitungsrechner verbunden ist.

## Claims

1. Method for operating an ETCS, European Train Control System, rail vehicle with a GSM-R communication device in an on-board unit (1) with at least one GSM-R mobile radio antenna (2,3) for a GSM-R mobile radio network with at least one connected GSM-R mobile radio device (4,5), in which, by means of a mobile multiplexer (8) with a control logic upstream of the mobile radio device (4,5), commands from an ETCS application unit (9) and from further application units (10 to 12) connected on the input side are recorded according to priority and a GSM-R network control and a connection set-up in the GSM-R mobile radio network are initiated as a function of the application units (9 to 12) according to priority via the GSM-R mobile radio device (4,5).

2. Method according to claim 1,
**characterised in that**
in the case of at least one further GSM-R mobile radio device (4,5) of the ETCS rail vehicle with the mobile multiplexer (8) the state of all mobile radio devices (4,5) of the ETCS rail vehicle is monitored and controlled according to priority.

3. Method according to claim 1 or 2,
**characterised in that**
in the case of the mobile multiplexer (8) inputs that can be freely linked on the input side to the connected application units (9 to 12) and outputs freely connected on the output side to interfaces of the mobile radio devices (4; 5) are used.

4. Method according to one of the preceding claims,
**characterised in that**
the application units (9 to 12) each generate priority features, by means of which priority-dependent connection and network control activities are carried out by the mobile multiplexer (8).

5. Method according to one of the preceding claims,
**characterised in that**
commands for GSM-R network control are generated exclusively by the ETCS application unit (9), wherein existing connections with low priority in non-commanded networks are triggered by the mobile multiplexer (8).

6. Method according to one of claims 1 to 4,
**characterised in that**
commands with priority features for GSM-R network control are generated by all application units, wherein existing connections with low priority in non-commanded networks are triggered by the mobile multiplexer.

7. Method according to one of claims 1 to 4,
**characterised in that**
commands with priority features for GSM-R network control are generated by all application units and commands for GSM-R network control with low priority are ignored by the mobile multiplexer.

8. Method according to one of the preceding claims,
**characterised in that**
commands of the ETCS application unit (9) for connection set-up requests and for network control are always prioritised.

9. ETCS, European Train Control System, rail vehicle with a communication device in an on-board unit (1) of the ETCS rail vehicle with at least one GSM-R mobile radio antenna (2,3) for a GSM-R mobile radio network with a connected GSM-R mobile radio device (4,5) in which
at least one mobile radio device (4, 5) is preceded by a mobile multiplexer (8) which is provided with a control logic and is suitable
for capturing commands from several application units (9 to 12) connected on the input side according to priority and for initiating a GSM-R network control and a connection set-up in the GSM-R mobile radio network as a function of the application units (9 to 12) via the downstream mobile radio device (4, 5) according to priority.

10. ETCS rail vehicle according to claim 9,
**characterised in that**
in the case of at least one further GSM-R mobile radio device (4,5) of the ETCS rail vehicle, the mobile multiplexer (8) is suitable for monitoring the status of all mobile radio devices (4,5) of the ETCS rail vehicle and controlling it according to priority.

11. ETCS rail vehicle according to claim 9 or 10,
**characterised in that**
the mobile multiplexer (8) is located in a non-safety-relevant preprocessing computer of the on-board unit (1) of the ETCS rail vehicle.

12. ETCS rail vehicle according to one of claims 9 to 11,
**characterised in that**
the further application units (9 to 12) are installed in the on-board unit (1).

13. ETCS rail vehicle according to one of claims 9 to 11,
**characterised in that**
at least one further application unit is installed outside the on-board unit in an external device which is connected to the non-safety-relevant preprocessing computer via an interface.

## Revendications

1. Procédé pour faire fonctionner un véhicule ferroviaire ETCS, European Train Control System, par un système de communication GSM-R dans une On-Board-Unit (1), ayant au moins une antenne (2, 3) de radiocommunication mobile GSM-R pour un réseau de radiocommunication mobile GSM-R ayant au moins un appareil (4, 5) de radiocommunication mobile GSM-R raccordé, dans lequel, au moyen d'un multiplexeur (8) mobile, monté avant l'appareil (4, 5) de radiocommunication mobile, on détecte, en fonction de la priorité, par une logique de commande des instructions d'une unité (9) d'application ETCS et d'autres unités (10 à 12) d'application raccordées du côté de l'entrée et, en fonction de la priorité, on provoque, par l'intermédiaire de l'appareil (4, 5) de radiocommunication mobile GSM-R, une commande de réseau GSM-R et un établissement de liaison dans le réseau de radiocommunication mobile GSM-R en fonction des unités (9 à 12) d'application.

2. Procédé suivant la revendication 1,
**caractérisé en ce que**,
pour au moins un autre appareil (4, 5) de radiocommunication mobile GSM-R du véhicule ferroviaire ETCS, on contrôle, par le multiplexeur (8) mobile, l'état de tous les appareils (4, 5) de radiocommunication mobiles du véhicule ferroviaire ETCS et on le commande en fonction de la priorité.

3. Procédé suivant la revendication 1 ou 2,
**caractérisé en ce que** l'on utilise dans le multiplexeur (8) mobile, du côté de l'entrée, des entrées pouvant être combinées librement aux unités (9 à 12) d'application raccordées et, du côté de la sortie, des sorties en liaison librement avec des interfaces des appareils (4, 5) de radiocommunication mobiles.

4. Procédé suivant l'une des revendications précédentes,
**caractérisé en ce que** les unités (9 à 12) d'application produisent respectivement des caractéristiques de priorité, au moyen desquelles ont lieu des activités de liaison et de commande de réseau en fonction de la priorité par le multiplexeur (8) mobile.

5. Procédé suivant l'une des revendications précédentes,
**caractérisé en ce que** l'on produit des instructions de commande du réseau GSM-R exclusivement par l'unité (9) d'application ETCS, des liaisons existantes de moindre priorité étant déclenchées par le multiplexeur (8) mobile dans des réseaux n'ayant pas reçu d'instruction.

6. Procédé suivant l'une des revendications 1 à 4,
**caractérisé en ce que** l'on produit des instructions ayant des caractéristiques de priorité pour la commande de réseau GSM-R par toutes les unités d'application, des liaisons existantes de moindre priorité étant déclenchées par le multiplexeur mobile dans des réseaux n'ayant pas reçu d'instruction.

7. Procédé suivant l'une des revendications 1 à 4,
**caractérisé en ce que** l'on produit des instructions ayant des caractéristiques de priorité pour la commande de réseau GSM-R par toutes les unités d'application et des instructions pour la commande du réseau GSM-R de moindre priorité sont négligées par le multiplexeur mobile.

8. Procédé suivant l'une des revendications précédentes,
**caractérisé en ce qu'**on donne toujours priorité à des instructions de l'unité (9) d'application ETCS pour des demandes d'établissement de liaison et pour la commande du réseau.

9. Véhicule ferroviaire ETCS, European Train Control System, comprenant un système de communication dans une On-Board-Unit (1) du véhicule ferroviaire ETCS ayant au moins une antenne (2, 3) de radiocommunication mobile GSM-R pour un réseau de télécommunication mobile GSM-R ayant un appareil (4, 5) de radiocommunication mobile GSM-R raccordé, dans lequel
un multiplexeur (8) mobile, pourvu d'une logique de commande, est monté en amont d'au moins un appareil (4, 5) de radiocommunication mobile et est propre
à détecter, en fonction de la priorité, des instructions de plusieurs unités (9 à 12) d'application raccordées du côté de l'entrée et
à provoquer, en fonction de la priorité, par l'appareil (4, 5) de radiocommunication mobile en aval, une commande de réseau GSM-R et un établissement de liaison dans le réseau de radiocommunication mobile GSM-R en fonction des unités (9 à 12) d'application.

10. Véhicule ferroviaire ETCS suivant la revendication 9,
**caractérisé en ce que**, pour au moins un autre appareil (4, 5) de radiocommunication mobile GSM-R du véhicule ferroviaire ETCS, le multiplexeur (8) mobile est propre à contrôler l'état de tous les appareils (4, 5) de radiocommunication mobiles du véhicule ferroviaire ETCS et à les commander en fonction de la priorité.

11. Véhicule ferroviaire ETCS suivant la revendication 9 ou 10,
**caractérisé en ce que** le multiplexeur (8) mobile se trouve dans un ordinateur de prétraitement non sécurisé de la On-Board-Unit (1) du véhicule ferroviaire ETCS.

12. Véhicule ferroviaire ETCS suivant l'une des revendications 9 à 11,
**caractérisé en ce que** les autres unités 9 à 12 d'application sont installées dans la On-Board-Unit (1).

13. Véhicule ferroviaire ETCS suivant l'une des revendications 9 à 11,
**caractérisé en ce qu'**au moins une autre unité d'application est installée à l'extérieur de la On-Board-Unit dans un dispositif extérieur, qui est relié par l'intermédiaire d'une interface à l'ordinateur de prétraitement non sécurisé.
